# EUROPÄISCHE PATENTSCHRIFT

(11) **EP 2 999 886 B1**
(45) Veröffentlichungstag und Bekanntmachung des Hinweises auf die Patenterteilung: **14.03.2018**
(21) Anmeldenummer: 14738362.4
(22) Anmeldetag: 20.05.2014
(51) Int. Cl.: F04B 43/00, F04B 43/12, F25B 21/00

(54) **VERWENDUNG EINES PUMPENSYSTEMS**
USE OF A PUMP SYSTEM
UTILISATION D'UN SYSTÈME DE POMPE

(30) Priorität: 23.05.2013 DE 102013105288
(43) Veröffentlichungstag der Anmeldung: 30.03.2016
(73) Patentinhaber: Hanning Elektro-Werke GmbH & Co. KG, 33813 Oerlinghausen (DE)
(72) Erfinder: BUCHALLA, Harald, 59494 Soest (DE)
(74) Vertreter: Wickord, Wiro
(86) Internationale Anmeldenummer: PCT/DE2014/100171
(87) Internationale Veröffentlichungsnummer: WO 2014/187447

(56) Entgegenhaltungen:
- EP-B1- 1 317 626
- DE-A1-102006 011 013
- DE-A1-102008 039 956
- US-A- 5 096 388
- US-A- 5 961 298
- US-A1- 2007 144 181

## Beschreibung

Aggregate, die mit dem Effekt der "Magnetokalorik" als Wärmepumpen arbeiten, sind seit geraumer Zeit bekannt. In diesen Aggregaten werden Stoffe, die den magnetokalorischen Effekt aufweisen, periodisch einem Magnetfeld ausgesetzt. Im Einfluss des Magnetfelds ändert sich die spezifische Wärmekapazität beziehungsweise Wärmespeicherfähigkeit des Stoffs.

Mittels zu- und abgeführter Medien (Gase, Flüssigkeiten) kann den Aggregaten Wärmeenergie zugeführt, auf ein anderes Temperaturniveau transformiert und wieder abgeführt werden. Für die Zu- und Abführung dieser Medien werden Pumpenanordnungen benötigt. Diese Pumpenanordnungen müssen wartungsarm und effizient arbeiten. Nachfolgend ist eine Pumpenanordnung dargestellt, die für diesen Anwendungszweck besonders gut geeignet ist.

### Stand der Technik

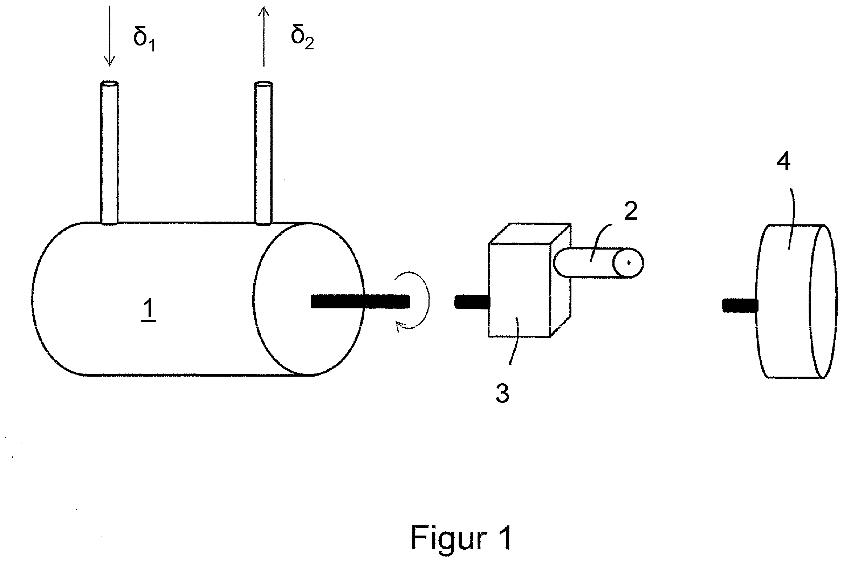

Figur 1 zeigt ein Aggregat 1, dem ein Medium mit einer Temperatur δ₁ zugeführt wird und von dem ein Medium mit der Temperatur δ₂ abgeführt wird. Um den Effekt der Temperaturtransformation zu erzeugen wird derartigen Aggregaten vorzugsweise rotatorische Energie zugeführt. Durch die verhältnismäßig großen Wärmezeitkonstanten der in den Aggregaten verwendeten Komponenten muss die Drehfrequenz der durch externe Antriebe induzierten Drehbewegung in den Aggregaten gering sein (insbesondere zwischen 0,5 Hz und 20 Hz, bevorzugt im Bereich von 1 Hz bis 10 Hz). Diese externen Antriebe können beispielsweise durch eine Kombination aus deutlich schneller laufenden, meistens zylinderförmig ausgeprägten Elektromotoren 2 und einem Reduziergetriebe 3 gebildet werden.

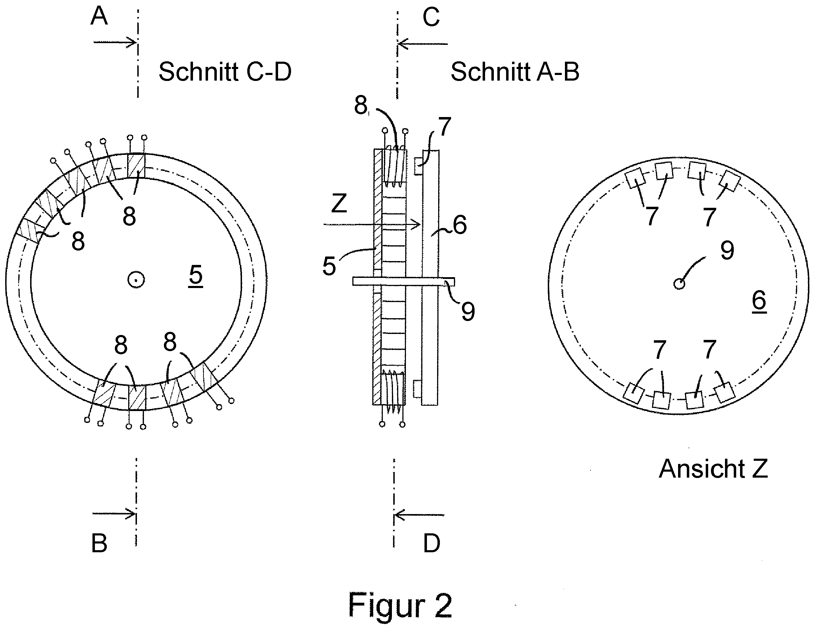

Deutlich kompakter, leiser, wartungsarmer und energieeffizienter ist die Nutzung eines scheibenförmig ausgeprägten, langsam laufenden Motors 4. Der Motor 4 kann dabei besonders vorteilhaft als hochpoliger Axialflussmotor ausgebildet sein. In Figur 2 ist ein solcher Motor als asymmetrische (einseitige) Axialflussmaschine dargestellt. Er ist als Synchronmotor ausgebildet und besteht aus einem Stator 5 und einem Rotor 6. Ein Drehmoment und damit die rotatorische Bewegung wird durch Anlegen eines Drehfeldes an den Spulen 8 über die auf dem Rotor 6 befestigten Permanentmagnete 7 erzeugt. Das Drehmoment kann über die Welle 9 entnommen werden.

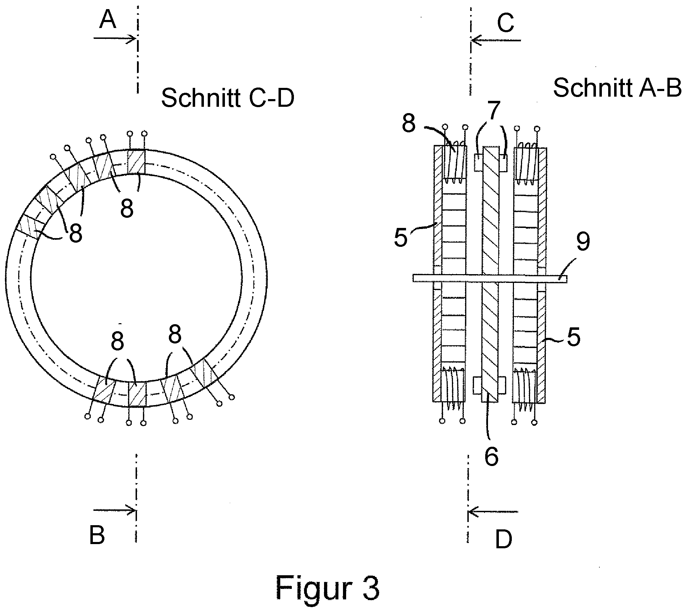

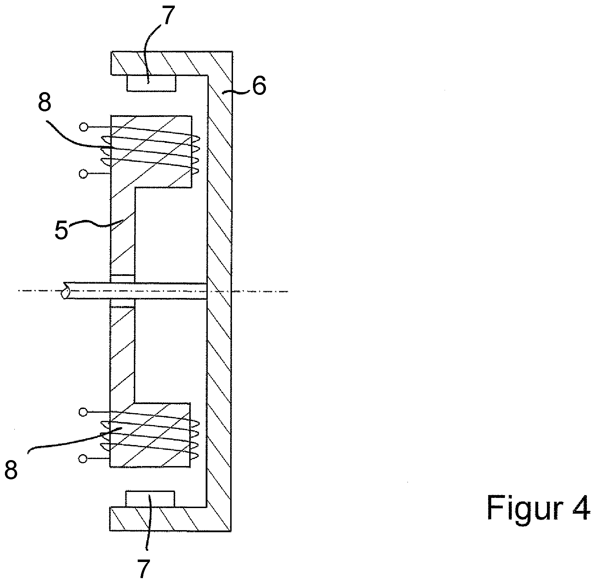

Figur 3 zeigt eine ähnliche Vorrichtung in Form einer symmetrisch, doppelseitig aufgebauten Axialflussmaschine. Ebenfalls für den oben genannten Zweck gut geeignet ist die Nutzung einer permanentmagneterregten Synchronmaschine nach dem Außenläuferprinzip (siehe Figur 4). Kennzeichnend für beide Motorvarianten ist der Hohlraum zwischen Rotor und Stator.

### Beschreibung der Erfindung

Die Erfindung ist auf die Verwendung eines nach dem Wanderwellenprinzip arbeitenden Pumpensystems nach Anspruch 1 gerichtet.

Der Hohlraum zwischen Rotor und Stator eignet sich hierbei in besonders guter Weise zur Unterbringung einer oder mehrerer Pumpen zum Transport des Wärmeleitmediums. Aufgrund der angestrebten räumlichen und funktionalen Integration der gesamten Anordnung und angesichts der dargelegten Antriebscharakteristik mit der geringen Drehzahl hat sich gezeigt, dass vorteilhaft nach dem Wanderwellenprinzip arbeitende Pumpensysteme zum Einsatz kommen können. Derartige Pumpensysteme werden beispielsweise in der europäischen Patentschrift EP 1 317 626 B1 beschrieben.

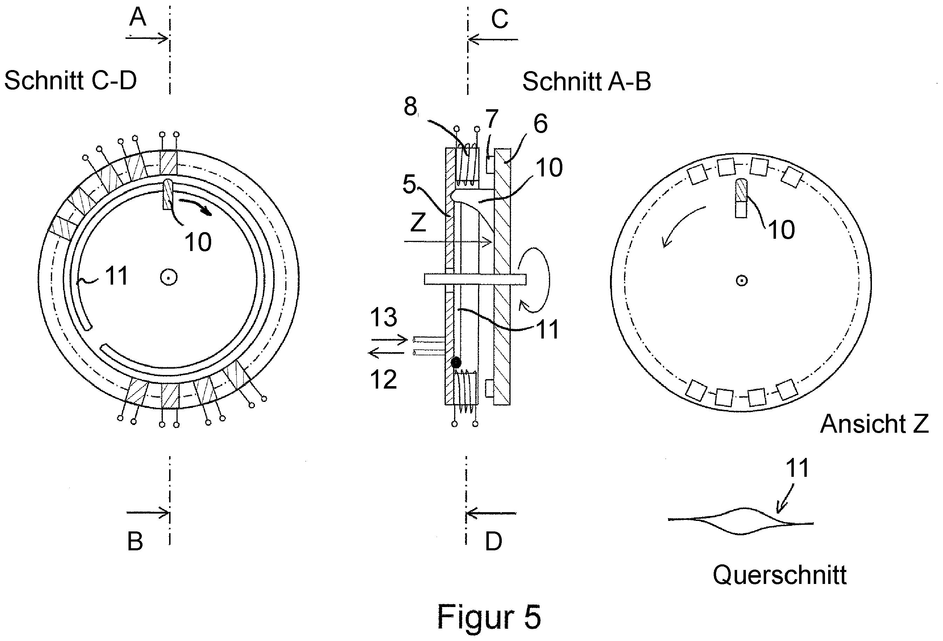

In Figur 5 ist gezeigt, wie man auf dem Stator 5 in einer ringförmigen Nut ein Pumpensystem nach dem Wanderwellenprinzip platziert. Überstreicht die Nocke 10 durch die rotatorische Bewegung des Rotors 6 periodisch die Membrananordnung 11, dann kann über die Anschlüsse 12 und 13 ein flüssiges oder gasförmiges Medium gefördert werden. Der Querschnitt der schlauchartigen Membrananordnung 11 entspricht dabei der in dem europäischen Patent EP 1 317 626 B1 beschriebenen Anordnung. Die Pumpe kann nahezu verschleißfrei betrieben werden und ist nahezu wartungsfrei, geräuscharm und effizient. Es sind dabei gemäß dem Prinzip der Wanderwellenpumpe keine Dichtungen an bewegten Teilen nötig. Da kaum Reibung zwischen Nocke 10 und Membrananordnung 11 auftritt, sind die involvierten Komponenten kaum verschleißbehaftet. Da diese Pumpenanordnung verdrängend oder als Strömungspumpe arbeiten kann (z. B über die Nockenhöhe einstellbar), sind breite Druckniveaus beispielsweise im Bereich von 10 mbar bis 20 bar abbildbar. Ferner ist ein nicht dargestelltes Mittel zur Bereitstellung eines veränderlichen Magnetfelds vorgesehen.

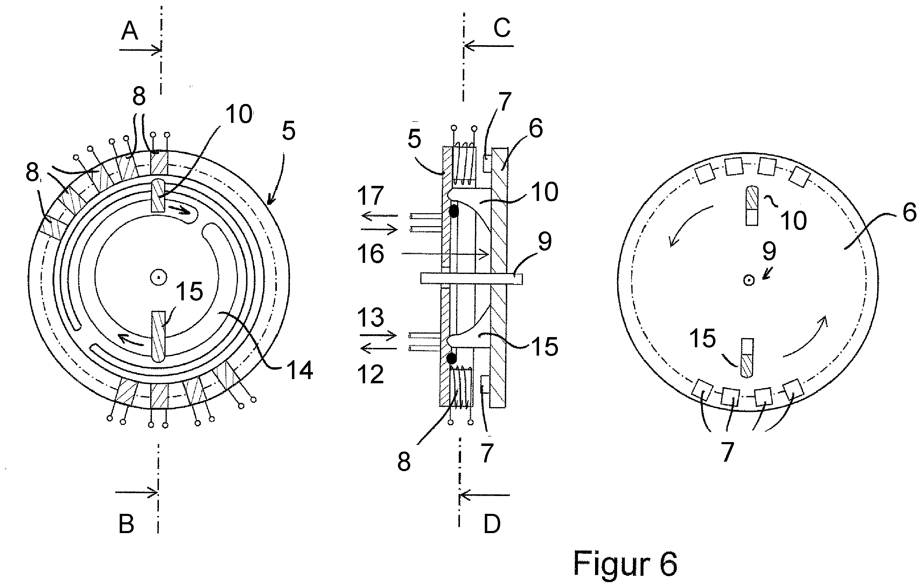

Figur 6 zeigte eine Weiterbildung der Anordnung mit zwei unabhängigen Medienkreisläufen durch eine weitere konzentrische Membrananordnung 14 und einen weiteren Nocken 15. Über die Anschlüsse 16 und 17 kann damit ein weiterer Medienkreislauf betrieben werden. Weiterhin zeigt Figur 6 die Membrananordnungen 11 und 14 in unterschiedlichen Querschnitten (Breiten, Höhen wären auch denkbar). Hiermit kann z.B. die unterschiedliche radiale Umlaufgeschwindigkeit der Nocken kompensiert werden, um gleiche Volumenströme in beiden Kreisläufen zu erzielen. Aber auch andere gemischte Betriebsarten mit unterschiedlichen Volumenströmen beziehungsweise Druckniveaus lassen sich realisieren.

Analog dazu sind weitere, insbesondere konzentrische Anordnungen für weitere Kreisläufe dabei denkbar und möglich.

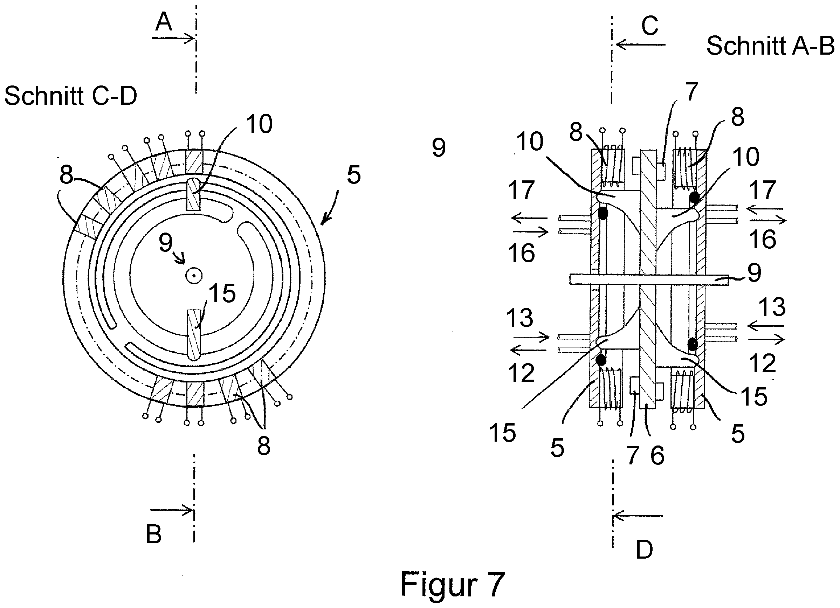

Figur 7 zeigt eine Weiterbildung der vorherigen Anordnung für eine symmetrisch (doppelseitig) aufgebaute Axialflussmaschine, die wie vorstehend dargelegt in verschiedenen Varianten realisiert werden kann.

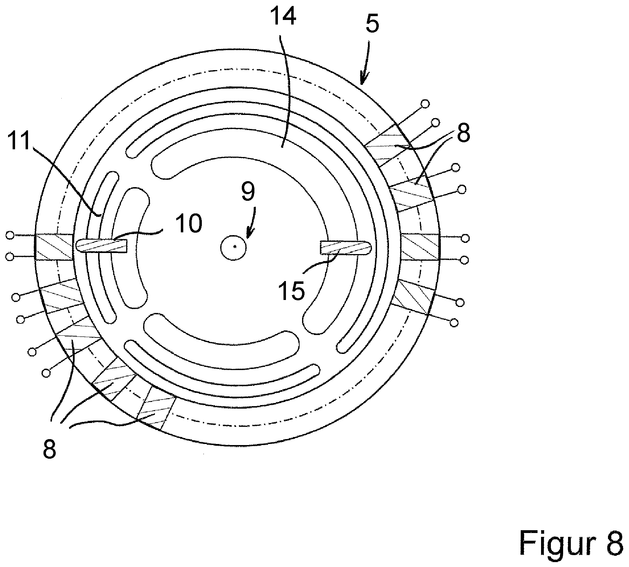

Figur 8 zeigt radial am Unfang segmentierte Anordnung. Die Segmentierung kann in beliebiger Anzahl und Ausformung realisiert werden.

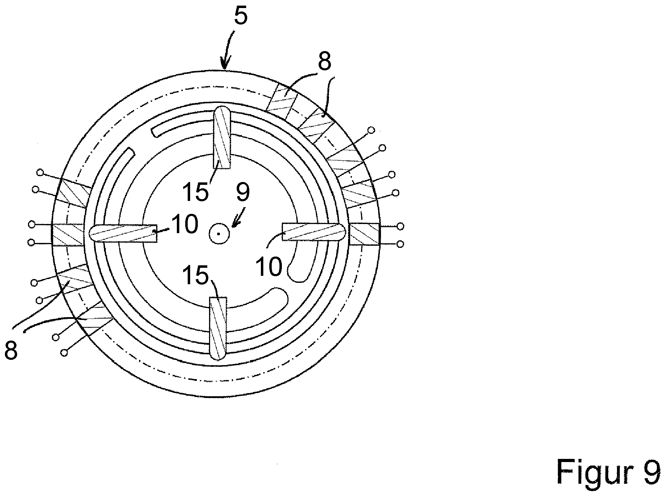

Figur 9 zeigt eine Anordnung mit mehreren Nocken pro Umlaufbahn (beliebige Anzahl und Ausformung denkbar).

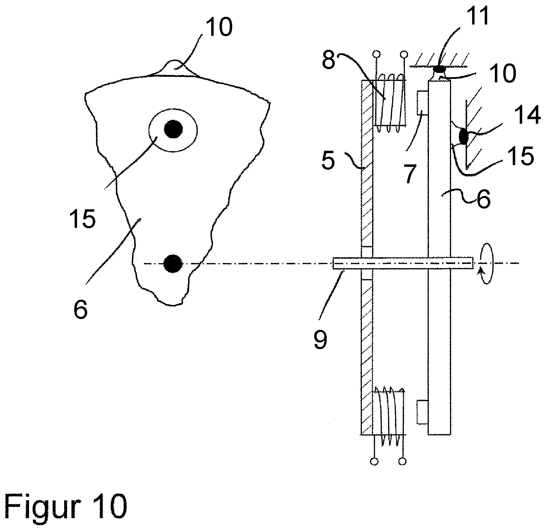

Figur 10 zeigt weitere Positionen für Membrananordnungen.

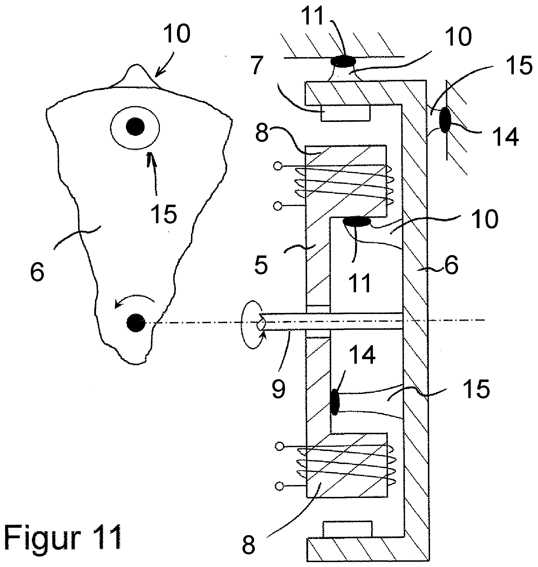

Figur 11 zeigt analog denkbare Positionen für Membrananordnungen in einer permanentmagneterregten Synchronmaschine nach dem Außenläuferprinzip.

Sofern ein Motor anderer Bauart, beispielsweise nach dem Innenläuferprinzip, zum Einsatz kommt, so gelten die Überlegungen analog zwischen zwei planparallelen Platten oder zwischen entsprechenden radialen Hohlräumen zwischen einer Innen- und Außenweand von zwei zylindirischen Anordnungen im oder an dem magnetokalorischen Aggregat.

Insbesondere kann vorgesehen sein, dass zur Verbesserung eines Wirkungsgrads der Anordnungen Maßnahmen zur Reduzierung der Reibung insbesondere zwischen der Membran 11, 14 und dem Nocken 10, 15 zu ergreifen. Insofern kann die ohnehin schon geringere Reibung durch das Vorsehen von Rollen oder die Verbesserung der Gleiteigenschaft - etwa durch das Beschichten der Membran 11, 14 beziehungsweise der Nocken 10, 15 - weiter zu verbessern.

Zudem ist das Pumpensystem lediglich exemplarisch im Spalt zwischen dem Rotor und dem Stator untergebracht. Grundsätzlich kann das Pumpensystem zwischen beliebigen, relativ zueinander bewegten Komponenten der Pumpenanordnung beziehungsweise des Antriebsaggregats angeordnet sein. Ferner kann der Motor dem Aggregat seitlich zugeordnet sein oder innerhalb des Aggregats an einer beliebigen Stelle integriert werden. Insofern ergibt sich eine integrative Realisierung mit geringem Bauraum.

## Patentansprüche

1. Verwendung eines nach dem Wanderwellenprinzip arbeitenden Pumpensystems für die Förderung durch eine Kanalanordnung eines flüssigen oder gasförmigen Wärmeleitmediums mittels eines Arbeitsaggregats, welches einen Stoff vorsieht, der den magnetokalorischen Effekt aufweist und der periodisch einem Magnetfeld ausgesetzt wird.

2. Verwendung nach Anspruch 1, **dadurch gekennzeichnet, dass** das Pumpensystem räumlich in das Arbeitsaggregat integriert vorgesehen ist.

3. Verwendung nach Anspruch 1 oder 2, **dadurch gekennzeichnet, dass** das Arbeitsaggregat eine rotierend arbeitende elektrische Maschine mit einem Rotor und einem Stator aufweist und dass das Pumpensystem zumindest teilweise in einem zwischen dem Rotor und dem Stator gebildeten Spalt der elektrischen Maschine untergebracht ist.

4. Verwendung nach einem der Ansprüche 1 bis 3, **dadurch gekennzeichnet, dass** das Pumpensystem mit einer Drehfrequenz im Bereich von 0,2 Hz bis 20 Hz, bevorzugt im Bereich von 1 Hz bis 10 Hz betrieben wird.

## Claims

1. Use of a pump system that operates in accordance with the travelling wave principle for conveying a liquid or gaseous heat transfer medium through a duct arrangement by means of a working assembly that provides a material that comprises a magnetocaloric effect and that is periodically exposed to a magnetic field.

2. Use according to claim 1, **characterised in that** the pump system is provided as spatially integrated into the working assembly.

3. Use according to claim 1 or 2, **characterised in that** the working assembly comprises an electric machine that operates in a rotating manner, said electric machine having a rotor and a stator and that the pump system is at least in part accommodated in a gap of the electric machine, said gap being formed between the rotor and the stator.

4. Use according to any one of claims 1 to 3, **characterised in that** the pump system is operated at a rotational frequency in the range of 0.2 Hz to 20 Hz, preferably in the range of 1 Hz to 10 Hz.

## Revendications

1. Utilisation d'un système de pompe fonctionnant selon le principe des ondes de propagation pour refouler à travers un agencement de canaux un milieu de conduction thermique liquide ou gazeux à l'aide d'une unité de travail, qui prévoit une substance qui présente l'effet magnétocalorique et est soumise périodiquement à un champ magnétique.

2. Utilisation selon la revendication 1, **caractérisée en ce que** le système de pompe est prévu intégré spatialement dans l'unité de travail.

3. Utilisation selon la revendication 1 ou 2, **caractérisée en ce que** l'unité de travail présente une machine électrique fonctionnant de manière rotative avec un rotor et un stator, et **en ce que** le système de pompe est au moins partiellement logé dans un interstice de la machine électrique formé entre le rotor et le stator.

4. Utilisation selon une des revendications 1 à 3, **caractérisée en ce que** le système de pompe est entraîné à une fréquence de rotation dans la plage de 0,2 Hz à 20 Hz, de préférence dans la plage de 1 Hz à 10 Hz.
